# EUROPÄISCHE PATENTSCHRIFT

(11) **EP 2 654 987 B1**
(45) Veröffentlichungstag und Bekanntmachung des Hinweises auf die Patenterteilung: **05.10.2016**
(21) Anmeldenummer: 11822803.0
(22) Anmeldetag: 22.12.2011
(51) Int. Cl.: B21H 7/18, B21D 3/16

(54) **VERFAHREN ZUM RICHTWALZEN VON KURBELWELLEN**
METHOD FOR THE ROLLER-STRAIGHTENING OF CRANKSHAFTS
PROCÉDÉ DE DRESSAGE DE VILEBREQUINS PAR ROULEAUX

(30) Priorität: 23.12.2010 DE 102010056616
(43) Veröffentlichungstag der Anmeldung: 30.10.2013
(73) Patentinhaber: Hegenscheidt-MFD GmbH & Co. KG, 41812 Erkelenz (DE)
(72) Erfinder: NOLTEN, Hans, 41812 Erkelenz (DE); BRUNEN, Heinz Josef, 41812 Erkelenz (DE)
(74) Vertreter: Patentanwälte Findeisen & Neumann
(86) Internationale Anmeldenummer: PCT/DE2011/002186
(87) Internationale Veröffentlichungsnummer: WO 2012/092920

(56) Entgegenhaltungen:
- EP-A2- 0 275 876
- DE-B4- 10 202 564
- DE-U1- 8 801 000
- JP-A- 59 101 228
- US-A- 5 001 917

## Beschreibung

Die Erfindung betrifft ein Verfahren zum Richtwalzen von Kurbelwellen mit Hilfe von Festwalzwerkzeugen, insbesondere von Festwalzrollen, die, während die Kurbelwelle um ihre Drehachse gedreht wird, mit über dem Umfang eines Lagerzapfens stetig wechselnder Richtwalzkraft in die Einstiche oder Radien gedrückt werden, welche den Lagerzapfen zu beiden Seiten begrenzen.

Aus DE 30 37 688 C2 ist ein Verfahren zum Richtwalzen von Kurbelwellen bekannt. Nach diesem Verfahren wird eine Kurbelwelle einer zu walzenden Serie mit einer konstanten Kraft F₀ festgewalzt, die etwa 1/3 der Mindestfestwalzkraft zur Erzielung der gewünschten Dauerfestigkeit entspricht. Hiernach wird die Kurbelwelle entnommen und der Verlauf und die Größe der eingetretenen Winkelaufweitungen gemessen. Anschließend wird durch entsprechende Maschineneinstellung mit einer Kraft F₁ richtgewalzt, die in ihrem Verlauf über den Drehwinkel der Kurbelwelle etwa proportional ist dem Verhältnis von größter Winkelaufweitung zu örtlicher Winkelaufweitung. Nach diesem bekannten Verfahren wird also der Schlag der Kurbelwelle, den sie durch das Festwalzen erhält, anhand der Winkelaufweitungen der Kurbelwangen gemessen. Diese Art der Messung ist umständlich und auch ungenau. Außerdem kann immer nur eine bestimmte Serie, d.h. eine vorgegebene Anzahl von gleichartigen Kurbelwellen, nach dem bekannten Verfahren gerichtet werden. Dazu wurden sogenannte Richtwalztabellen erstellt, nach denen sodann jede Kurbelwelle der zu walzenden Serie nach immer demselben Schema richtgewalzt wird. Das setzt eine hohe Fertigungskonstanz bei den festzuwalzenden Kurbelwellen voraus. Individuelle Abweichungen einzelner Kurbelwellen können hierbei nicht berücksichtigt werden. Außerdem ist es aus der vorgenannten Schrift bekannt, die Festwalzkraft über dem Verlauf des Umfangs des zu walzenden Lagerzapfens stetig zu ändern. Der stetige Übergang von minimaler zu maximaler Festwalzkraft schont Maschine und Werkzeuge.

Aus der DE 29 20 889 C2 ist es darüber hinaus bekannt, die Festwalzkraft oszillieren zu lassen.

Aus der DE 102 02 564 B4 ist ein Verfahren zum Fest-und Richtwalzen einer Kurbelwelle aus einer Serie von gleichartigen Kurbelwellen bekannt, in dem man die Vektoren der durch das Festwalzen an der Kurbelwelle auftretenden Verbiegungen berücksichtigt. Das geschieht dadurch, dass man
- beginnend an einem Ende von einer ersten Kurbelwelle
- die erste Lagerstelle mit einer ersten Festwalzkraft festwalzt und dazu
- die Vektoren der Verbiegungen an allen Hauptlagern misst, sodann
- in derselben Weise fortschreitend nacheinander alle anderen Lagerstellen der Kurbelwelle mit derselben Festwalzkraft festwalzt und dazu
- die jeweiligen Vektoren der Schläge an allen Hauptlagern misst und
- aus den Vektoren der Messungen eine Matrix H bildet.

Nachteilig an dem bekannten Verfahren ist hier wiederum, dass ausgehend von den Messungen, die man an einer ersten aus einer Serie von Kurbelwellen vornimmt, Daten gewonnen werden, wonach alle übrigen Kurbelwellen der Serie festgewalzt werden. Für ein individuelles Richtwalzen einzelner Kurbelwellen eignet sich das bekannte Verfahren nicht. Dazu kommt, dass durch das Bilden von Matrizen der Rechenaufwand für das Fest- und Richtwalzen sehr groß ist. Das erfordert erweiterte Rechenkapazitäten in der Maschinensteuerung bzw. vergrößert und verteuert die Maschinensteuerung entsprechend. Aus EP 0 275 876 A2 ist ein Verfahren zum Richtwalzen von Kurbelwellen mit Hilfe von Festwalzwerkzeugen, insbesondere von Festwalzrollen bekannt, die, während die Kurbelwelle um ihre Drehachse gedreht wird, mit über dem Umfang eines Lagerzapfens stetig wechselnder Richtwalzkraft in die Einstiche oder Radien gedrückt werden, welche den Lagerzapfen zu beiden Seiten begrenzen. Während oder nach dem Festwalzen wird an jedem Hauptlager der Kurbelwelle ein Einzelvektor des Schlages nach Größe und Richtung bestimmt. Nach der Bestimmung der Vektoren werden Richtvorgänge in zwei senkrecht zueinander stehenden Ebenen durchgeführt.

Die Aufgabe der vorliegenden Erfindung besteht darin, ein Verfahren zum Richtwalzen vorzuschlagen, welches, bei geringem Rechenaufwand für die Steuerung, ein individuelles Richten jeder einzelnen Kurbelwelle ermöglicht. Auf diese Weise können Kleinserien wirtschaftlich und mit großer Genauigkeit bearbeitet werden und metallurgische sowie durch die vorausgegangenen Bearbeitungen eingebrachte Unterschiede bei jeder einzelnen Kurbelwelle berücksichtigt werden.

Die Aufgabe wird dadurch gelöst, dass man
- aus den Einzelvektoren den größten oder den resultierenden Vektor ermittelt und sodann
- die Haupt- und Hublagerzapfen der Kurbelwelle mit einer Richtwalzkraft festwalzt, die in der Richtung des größten oder des resultierenden Vektors liegt und in der Größe zwischen den Werten 0 und einer mehrfachen Größe des größten oder des resultierenden Vektors liegt.

Da der größte Schlag an einer Kurbelwelle überwiegend an einem einzigen Hauptlagerzapfen feststellbar ist, während die Schläge an den übrigen Hauptlagerzapfen davon abweichen, ist es vorteilhaft, wenn man die Größe der Richtwalzkraft von Lagerzapfen zu Lagerzapfen verändert. Das heißt, die dem Flansch und dem Zapfen der Kurbelwelle benachbarten Haupt- und Hublagerzapfen werden beispielsweise mit einer anderen Richtwalzkraft bearbeitet, als die dem Lagerzapfen mit dem größten Schlag benachbarten Haupt- und Hublagerzapfen.

Vorteilhaft ist es, wenn man die größte Richtwalzkraft auf den Lagerzapfen ausübt, bei dem der größte Schlag gemessen wurde.

Das Verfahren ist auch dazu geeignet, dass man das Richtwalzen in process, d.h. während des Festwalzens ausführt. Man braucht also nicht das Festwalzergebnis abzuwarten, um danach die Richtwalzoperation durchzuführen, sondern kann bereits während des Festwalzens Daten gewinnen, die sogleich zum Fest- und Richtwalzen miteinander kombiniert werden können.

Der Vektor des größten Schlages wird während oder nach dem Festwalzen durch Messung an den Hauptlagerzapfen gemessen. Der Vektor des resultierenden Schlages der Kurbelwelle wird während oder nach dem Festwalzen durch vektorielle Addition der Einzelvektoren der Schläge bestimmt.

Man kann auch die gesamte axiale Länge einer Kurbelwelle in einzelne Längenabschnitte unterteilen und die einzelnen Längenabschnitte gesondert richtwalzen. Ein solches Vorgehen bietet sich an, wenn Kurbelwellen richtgewalzt werden müssen, die einen S-Schlag haben. S-Schläge sind beispielsweise häufiger zu beobachten an Kurbelwellen von mehrzylindrischen V-Motoren.

Zur Ermittlung des Schlages an Kurbelwellen eignet sich beispielsweise eine Einrichtung, wie sie aus der DE 100 60 219 B4 bekannt ist. Die Einrichtung verfügt über eine Mehrzahl von Messtastern, welche zur Messung der Einzelschläge auf die Hauptlagerzapfen der Kurbelwelle herabgesenkt werden. Die gemessenen Werte gehen unmittelbar in die Maschinensteuerung ein.

Nachfolgend wird die Erfindung an einem Ausführungsbeispiel näher beschrieben. Es zeigen jeweils in einem Ausschnitt und in verkleinertem Maßstab die
- Fig. 1 einen Längsschnitt durch eine Festwalzmaschine für Kurbelwellen,

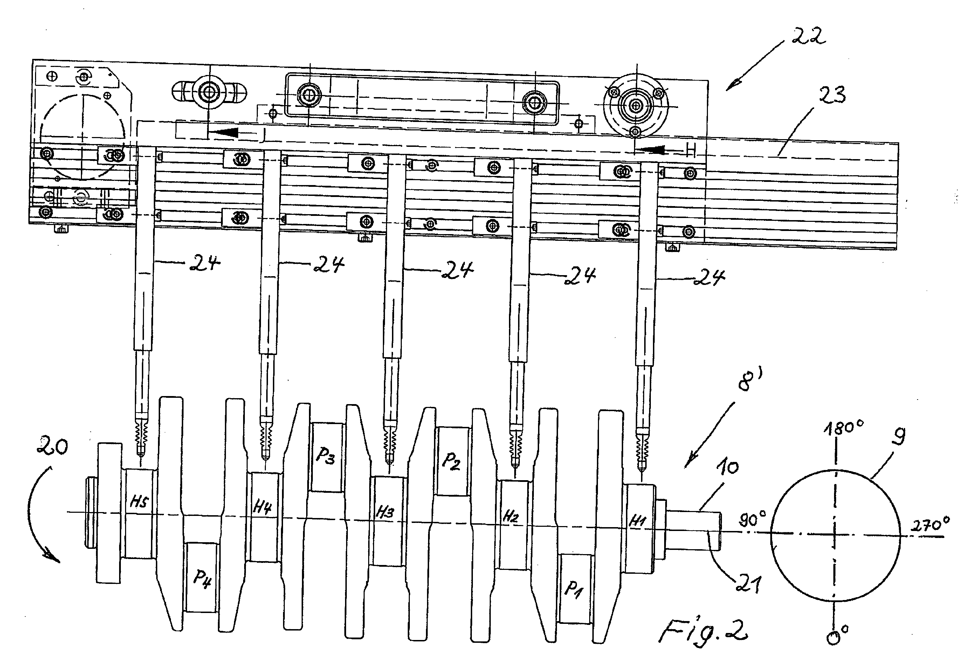

- Fig. 2 eine Messeinrichtung zur Ermittlung der Schläge in der Vorderansicht,
- Fig. 3 die Messeinrichtung der Fig. 2 in der Seitenansicht, und
- Fig. 4 einen Schnitt durch einen beliebigen Hauptlagerzapfen Hi einer Kurbelwelle mit der Darstellung des resultierenden Schlages und der Richtwalzkraft
- Fig. 5 einen Schnitt durch einen beliebigen Hauptlagerzapfen Hi einer Kurbelwelle mit der Darstellung des höchsten Schlages und der Richtwalzkraft.

Zur Erfassung der " Krümmung" einer Kurbelwelle 8, 8' wird ihr Schlag gemessen. Bei der Schlagmessung werden der größte Ausschlag (µm) und die Richtung (°) des größten Ausschlages an den Hauptlagern H₁ bis H₅ gemessen. Das Ergebnis kann z. B. lauten 268/177; das bedeutet 268 µm Schlag bei Winkel 177 °. Die Winkelangabe bezieht sich auf das Koordinatensystem 9 der Kurbelwelle 8, 8' und ist für alle Kurbelwellentypen einheitlich definiert. Die Richtung des höchstwertigen Pleuellagers P₄, Zählweise vom Zapfen 10 aus, liegt bei 0°. Die Drehrichtung 20 der Kurbelwelle 8, 8' beim Festwalzen, Blick auf das Futter 11 der Festwalzmaschine 12, ist entgegen dem Uhrzeigersinn. Die Winkelzählrichtung, auf das Werkstück Kurbelwelle 8, 8' bezogen, ist im Uhrzeigersinn.

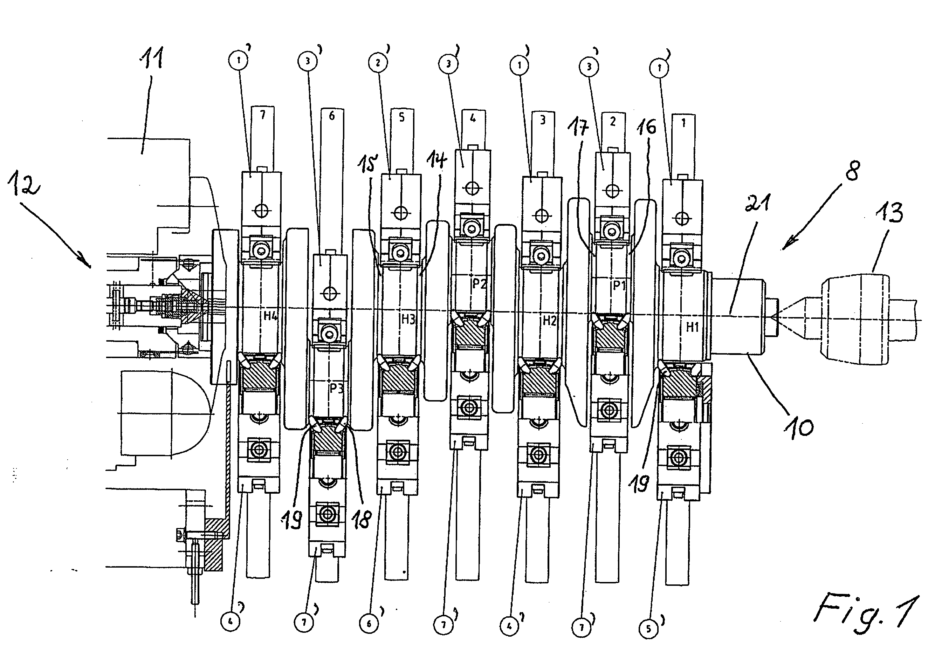

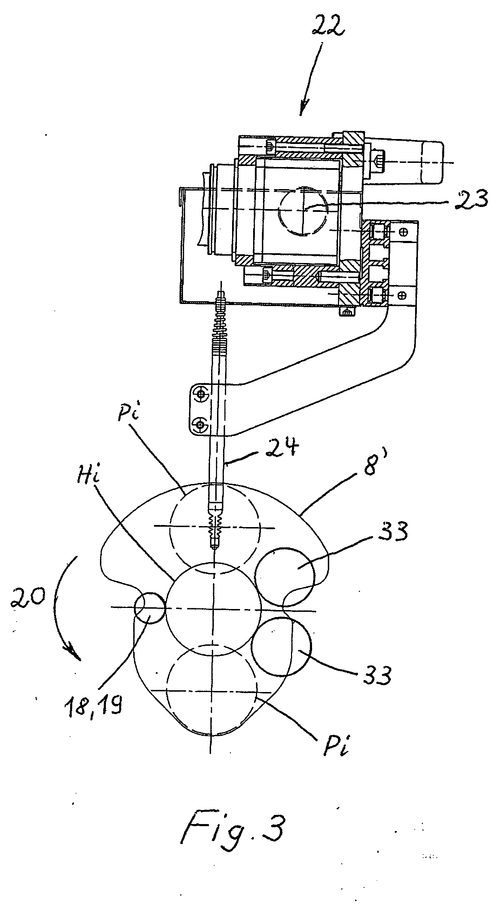

In der Fig. 1 ist in eine Festwalzmaschine 12 beispielsweise eine 3-Zylinder Kurbelwelle 8 zwischen dem Futter 11 und der Pinole 13 eingespannt. An den Hauptlagerzapfen H₁. H₂. H₃ und H₄ werden die Einstiche 14 und 15 mit Hilfe der Festwalzwerkzeuge 1, 3, 5 und 7 festgewalzt. An den Hublagerzapfen P₁, P₂ und P₃ werden die Einstiche 16 und 17 mit den Festwalzwerkzeugen 2, 4 und 6 festgewalzt. Jedes Festwalzwerkzeug 1 bis 7 besteht aus einem Stützrollenkopf 1', 2', 3' mit Stützrollen 33 (Fig. 3) und einem Festwalzrollenkopf 4', 5', 6' und 7'. Festwalzrollen 18 und 19 dringen beim Festwalzen der Hauptlager H₁ bis H₄ in die Einstiche 14 und 15 ein, und beim Festwalzen der Hublager P₁ bis P₃ in die Einstiche 16 und 17. Während des Festwalzens wird die Kurbelwelle 8 vom Futter 11 in Richtung des Pfeils 20 um ihre Hauptdrehachse 21 gedreht.

In der Fig. 3 ist die Lage der Festwalzrollen 18 bzw. 19 und der Stützrollen 33 beim Fest- bzw. Richtwalzen angedeutet, wie es dem Fest- und Richtwalzen in process entspricht.

Zur Messung des Schlages dient beispielhaft eine Messeinrichtung 22, die um eine Schwenkachse 23 schwenkbar ist. Die Messeinrichtung 22 weist, in einer Reihe angeordnet, mehrere Messfühler 24 auf, welche durch Verschwenken der Messeinrichtung 22 um die Schwenkachse 23 auf die Hauptlagerzapfen H₁ bis H₅, beispielsweise einer 4-Zylinder-Kurbelwelle 8', abgesenkt werden. Durch Drehen der Kurbelwelle 8' in der Richtung 20 werden die Einzelschläge 34 bis 38 am jeweiligen Hauptlager H1 bis H₅ nach Größe und Richtung, Winkel 39 bis 42, ermittelt.

Durch vektorielle Addition, welche sich in der Maschinensteuerung (nicht gezeigt) vollzieht, wird aus den Einzelschlägen 34 bis 38 der resultierende Schlag 25 nach Größe und Richtung 26 ermittelt.

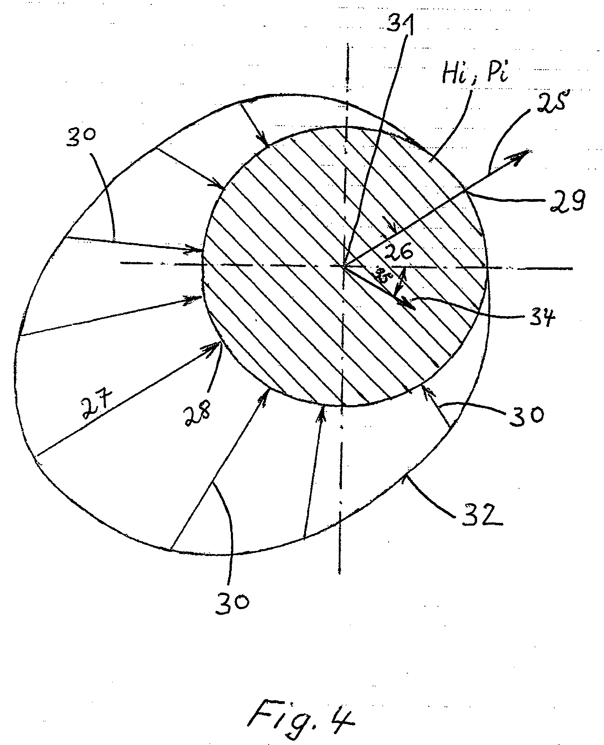

Der resultierende Schlag 25 löst sodann an den Festwalzwerkzeugen 1 bis 7 eine Richtwalzkraft 27 aus, die in der Größe dem resultierenden Vektor 25 und dessen Richtung 26 entspricht. Die Richtwalzkräfte 27 und 30 sind immer auf den Mittelpunkt 31 des jeweiligen Lagerzapfens H₁ bis H₅ bzw. P₁ bis P₄ gerichtet. An der dem Auftreffpunkt 28 der größten Richtwalzkraft 27 gegenüberliegenden Stelle 29 der Lagerzapfen Hᵢ bzw. Pᵢ ist die Richtwalzkraft 30 beispielsweise gleich "0". Über dem Umfang der Lagerzapfen Hᵢ bis Pᵢ nehmen die Richtwalzkräfte 30 kontinuierlich ab, wie das aus der Umrisslinie 32 zu erkennen ist. Abweichend von dem in der Fig. 4 gezeigten Beispiel, wo die Richtwalzkraft an der Stelle 29 den Wert "0" annimmt, kann sie an derselben Stelle auch einen endlichen Wert annehmen, der einem Anteil der maximalen Richtwalzkraft 27 entspricht.

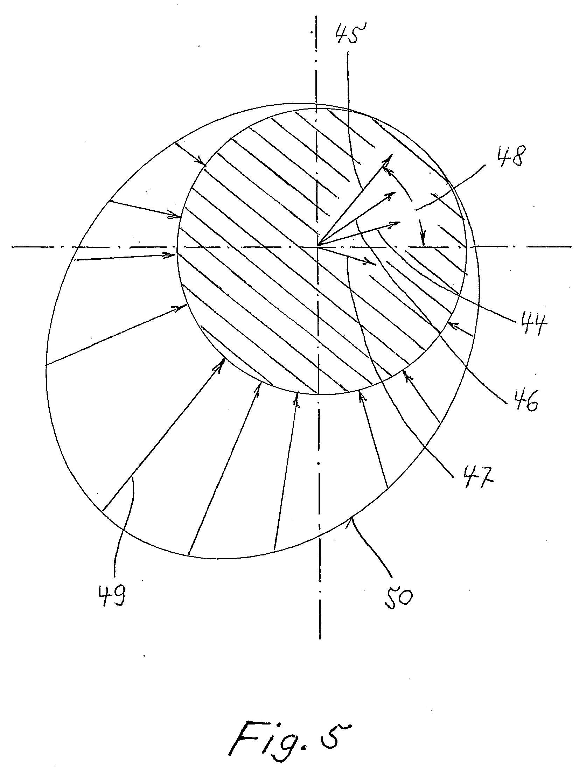

Im Vergleich mit dem vorstehend beschriebenen Verfahrensbeispiel kann ein demgegenüber vereinfachtes Verfahren durchaus auch zum Ziele führen. Ein dementsprechendes Verfahren ist in der Figur 5 dargestellt. Hier wurden während oder nach dem Festwalzen an den einzelnen Hauptlagerzapfen H₁, H₂, H₃ und H₄ die Einzelschläge 44, 45, 46 und 47 gemessen. Darunter ist der Einzelschlag 45 nach Größe und Richtung 48 der höchste. Mit einer diesem Einzelschlag 45 entsprechenden Richtwalzkraft 49 wird die Kurbelwelle 8,8' nunmehr beispielsweise an dem Hauptlagerzapfen H₂ oder an einem dem Hauptlagerzapfen H₂ benachbarten Hublagerzapfen P₁ oder P₂ richtgewalzt. Diese Richtwalzkraft 49 nimmt ebenfalls Werte zwischen einem x-fachen Wert des höchsten Schlages 45 und dem Wert "0" an. Der Kraftverlauf über dem Umfang wird von der Linie 50 angegeben.

Wie vorstehend beschrieben, wird der höchste Schlag 45 von der Maschinensteuerung ermittelt. Welche Art der Verfahrensführung, entweder nach Fig. 4 oder nach Fig. 5, bevorzugt anzuwenden ist, wird vorab durch einen Versuch ermittelt. Die bevorzugte Verfahrensführung kann aber von einer komplexen Maschinensteuerung auch unmittelbar in process ermittelt und angewendet werden.

### Bezugszeichenliste

- H₁, H₂, H₄ und H₅: Hauptlagerzapfen (Hᵢ)
- H₃: Passlagerzapfen
- P₁, P₂, P₃ und P₄: Hublagerzapfen (Pᵢ)
- 1 bis 7: Festwalzwerkzeuge bestehend jeweils aus einem Festwalzrollenkopf 4'.5',6',7', und einem Stützrollenkopf 1',2',3',
- 1'.: Stützrollenkopf für Hauptlagerzapfen H₁, H₂, H₄, H₅
- 2'.: Stützrollenkopf für Passlagerzapfen H₃
- 3'.: Stützrollenkopf für Hublagerzapfen P₁,P₂, P₃, P₄,
- 4'.: Festwalzrollenkopf für Hauptlagerzapfen H₂, H₄, H₅,
- 5'.: Festwalzrollenkopf für Hauptlagerzapfen H₁
- 6'.: Festwalzrollenkopf für Passlagerzapfen H₃
- 7'.: Festwalzrollenkopf für Hublagerzapfen P₁, P₂, P₃, P₄
- 8.: 3-Zylinder Kurbelwelle
- 8'.: 4-Zylinder Kurbelwelle
- 9.: Koordinatensystem
- 10.: Zapfen
- 11.: Futter
- 12.: Festwalzmaschine
- 13.: Pinole
- 14.: Einstich
- 15.: Einstich
- 16.: Einstich
- 17.: Einstich
- 18.: Festwalzrolle
- 19.: Festwalzrolle
- 20.: Drehrichtung der Kurbelwelle
- 21.: Hauptdrehachse der Kurbelwelle
- 22.: Messeinrichtung
- 23.: Schwenkachse der Messeinrichtung 22
- 24.: Messfühler
- 25.: resultierender Schlag der Größe nach
- 26.: Richtung des resultierenden Schlages
- 27.: größte Richtwalzkraft
- 28.: Auftreffstelle der größten Richtwalzkraft 27
- 29.: gegenüberliegende Stelle
- 30.: Richtwalzkräfte
- 31.: Mittelpunkt, jeweils Drehachse der Hauptlagerzapfen Hᵢ oder Hublagerzapfen Pᵢ
- 32.: Verlauf der Richtwalzkraft
- 33.: Stützrolle
- 34.: Einzelschlag
- 35.: Einzelschlag
- 36.: Einzelschlag
- 37.: Einzelschlag
- 38.: Einzelschlag
- 39.: Richtung des Einzelschlages 34
- 40.: Richtung des Einzelschlages 35
- 41.: Richtung des Einzelschlages 36
- 42.: Richtung des Einzelschlages 37
- 43.: Richtung des Einzelschlages 38
- 44.: Einzelschlag
- 45.: Einzelschlag
- 46.: Einzelschlag
- 47.: Einzelschlag
- 48.: Richtung des Einzelschlages 45
- 49.: Richtwalzkraft
- 50.: Verlauf der Richtwalzkraft

## Patentansprüche

1. Verfahren zum Richtwalzen von Kurbelwellen mit Hilfe von Festwalzwerkzeugen, insbesondere von Festwalzrollen, die, während die Kurbelwelle um ihre Drehachse gedreht wird, mit über dem Umfang eines Lagerzapfens stetig wechselnder Richtwalzkraft in die Einstiche oder Radien gedrückt werden, welche den Lagerzapfen zu beiden Seiten begrenzen, wobei man während oder nach dem Festwalzen an jedem Hauptlager (Hᵢ) der Kurbelwelle (8, 8') den Einzelvektor (44, 45, 46, 47) des Schlages nach Größe und Richtung bestimmt, **dadurch gekennzeichnet, dass** man
- aus den Einzelvektoren (44, 45, 46, 47) den größten Vektor (45) nach Größe und Richtung (48) ermittelt und sodann
- die Lagerzapfen (Hᵢ, Pᵢ) der Kurbelwelle (8, 8') mit einer Richtwalzkraft (46, 50) richtwalzt, die in der Richtung (48) des größten Vektors (45) liegt und in der Größe Werte annimmt, die zwischen dem Wert 0 und einem mehrfachen Wert der Größe des größten Vektors (45) liegt.

2. Verfahren zum Richtwalzen von Kurbelwellen mit Hilfe von Festwalzwerkzeugen, insbesondere von Festwalzrollen, die, während die Kurbelwelle um ihre Drehachse gedreht wird, mit über dem Umfang eines Lagerzapfens stetig wechselnder Richtwalzkraft in die Einstiche oder Radien gedrückt werden, welche den Lagerzapfen zu beiden Seiten begrenzen, wobei man während oder nach dem Festwalzen an jedem Hauptlager (Hᵢ) der Kurbelwelle (8, 8') den Einzelvektor (34, 35, 36, 37, 38) des Schlages nach Größe und Richtung (39, 40, 41, 42, 43) bestimmt, **dadurch gekennzeichnet, dass** man
- aus den Einzelvektoren (34, 35, 36, 37, 38) den resultierenden Vektor (25) nach Größe und Richtung (26) ermittelt und sodann
- die Lagerzapfen (Hᵢ, Pᵢ) der Kurbelwelle (8, 8') mit einer Richtwalzkraft (27, 30) richtwalzt, die in der Richtung (26) des resultierenden Vektors (25) liegt und in der Größe Werte annimmt, die zwischen dem Wert 0 und einem mehrfachen Wert der Größe des größten Vektors (25) liegt.

3. Verfahren nach Anspruch 1 oder 2, **dadurch gekennzeichnet, dass** man die Größe der Richtwalzkraft (27, 30 bzw. 49, 50) von Lagerzapfen (Hᵢ, Pᵢ) zu Lagerzapfen (Hᵢ, Pᵢ) verändert.

4. Verfahren nach Anspruch 1 oder 2, **dadurch gekennzeichnet, dass** man das Richtwalzen in process, d. h. während des Festwalzens ausführt.

5. Verfahren nach Anspruch 2, **dadurch gekennzeichnet, dass** man den resultierenden Vektor (25) des Schlages durch vektorielle Addition der Einzelvektoren (34, 35, 36, 37, 38) der Schläge bestimmt.

6. Verfahren nach Anspruch 1 oder 2, **dadurch gekennzeichnet, dass** man die gesamte axiale Länge einer Kurbelwelle (8, 8') in einzelne Längenabschnitte unterteilt und die einzelnen Längenabschnitte gesondert richtwalzt.

## Claims

1. Method for the roll straightening of crankshafts with the help of deep rolling tools, in particular work rollers which, while the crankshaft is turned around its axis of rotation, are pressed with a straightening force which is continually changing over the circumference of a bearing journal into the recesses or radii which confine the bearing journal on both sides, wherein during or after the deep rolling process the individual vector (44, 45, 46, 47) of the runout is determined on each main bearing (Hᵢ) of the crankshaft (8.8') according to its size and direction, **characterised in that** during or after the deep rolling process
- the largest vector (45) is determined from the individual vectors (44, 45, 46, 47) according to size and direction (48) and then
- the bearing journal (Hᵢ, Pᵢ) of the crankshaft (8,8') is roll straightened with a straightening force (46,50) which lies in the direction (48) of the largest vector (45) and takes on values in terms of its size which lie between the value 0 and a multiple value of the size of the largest vector (45).

2. Method for the roll straightening of crankshafts with the help of deep rolling tools, in particular work rollers which, while the crankshaft is turned around its axis of rotation, are pressed with a straightening force which is continually changing over the circumference of a bearing journal into the recesses or radii which confine the bearing journal on both sides, wherein during or after the deep rolling process the individual vector (34, 35, 36, 37, 38) of the runout is determined on each main bearing (Hᵢ) of the crankshaft (8.8') according to its size and direction (39, 40, 41, 42, 43), **characterised in**
- the resulting vector (25) is determined from the individual vectors (34, 35, 36, 37, 38) according to size and direction (26) and then
- the bearing journal (Hᵢ, Pᵢ) of the crankshaft (8,8') is roll straightened with a straightening force (27, 30) which lies in the direction (26) of the resulting vector (25) and takes on values in terms of its size which lie between the value 0 and a multiple value of the size of the largest vector (25).

3. Method according to claim 1 or 2, **characterised in that** the size of the straightening force (27, 30 and 49, 50) is changed from bearing journal (Hᵢ, Pᵢ) to bearing journal (Hᵢ, Pᵢ).

4. Method according to claim 1 or 2, **characterised in that** the roll straightening is performed in process, i.e. during the deep rolling process.

5. Method in accordance with claim 2, **characterised in that** the resulting vector (25) of the runout is determined by vectorial addition of the individual vectors (34, 35, 36, 37, 38) of the runouts.

6. Method according to claim 1 or 2, **characterised in that** the entire axial length of a crankshaft (8,8') is divided up into individual length sections and the individual length sections are roll straightened separately.

## Revendications

1. Procédé de redressage de vilebrequins à l'aide d'outils de galetage (notamment de galets de galetage) qui, pendant que le vilebrequin tourne sur son axe, sont enfoncés avec une force de redressage variable sur la circonférence d'un tourillon dans les entailles ou les rayons qui délimitent les tourillons des deux côtés ; pendant ou après le galetage, on marque sur chaque palier principal (Hᵢ) du vilebrequin (8,8') le vecteur individuel (44, 45, 46, 47) du battement selon la taille et la direction ; **caractérisé par le fait que** l'on,
pendant ou après le galetage,
- calcule à partir des vecteurs individuels (44, 45, 46, 47) le plus grand vecteur (45) selon la taille et la direction (48)
- redresse les tourillons (Hᵢ, Pᵢ) du vilebrequin (8,8') en exerçant une force de redressage (46, 50) dans le sens (48) du plus grand vecteur (45) et dont la valeur oscille entre 0 et un multiple du plus grand vecteur (45).

2. Procédé de redressage de vilebrequins à l'aide d'outils de galetage (notamment de galets de galetage) qui, pendant que le vilebrequin tourne sur son axe, sont enfoncés avec une force de redressage variable sur la circonférence d'un tourillon dans les entailles ou les rayons qui délimitent les tourillons des deux côtés ; pendant ou après le galetage, on marque sur chaque palier principal (Hᵢ) du vilebrequin (8,8') le vecteur individuel (34, 35, 36, 37, 38) du battement selon la taille et la direction (39, 40, 41, 42, 43) ; **caractérisé par le fait que**
l'on
- calcule à partir des vecteurs individuels (34, 35, 36, 37, 38) le vecteur résultant (25) selon la taille et la direction (26)
- redresse les tourillons (Hᵢ, Pᵢ) du vilebrequin (8,8') en exerçant une force de redressage (27, 30) dans le sens (26) du vecteur résultant (25) et dont la valeur oscille entre 0 et un multiple du plus grand vecteur (25).

3. Procédé selon revendication 1 ou 2, **caractérisé par le fait que** l'on change la force de redressage (27, 30 ou 49, 50) de tourillons (Hᵢ, Pᵢ) en tourillons (Hᵢ, Pᵢ).

4. Procédé selon revendication 1 ou 2, **caractérisé par le fait que** l'on effectue le redressage au cours du processus, c'est-à-dire pendant le galetage.

5. Procédé selon revendication 2, **caractérisé par le fait que** l'on détermine le vecteur résultant (25) du battement en additionnant les vecteurs individuels (34, 35, 36, 37, 38) des battements.

6. Procédé selon revendication 1 ou 2, **caractérisé par le fait que** l'on divise la longueur axiale d'un vilebrequin (8,8') en plusieurs sections qui seront redressées individuellement.
